# EUROPEAN PATENT SPECIFICATION

(11) **EP 1 310 843 B1**
(45) Date of publication and mention of the grant of the patent: **18.04.2007**
(21) Application number: 02257752.2
(22) Date of filing: 08.11.2002
(51) Int. Cl.: G05B 19/4069, G05B 19/418, G05B 17/02

(54) **Simulation device**
Simulationsvorrichtung
Dispositif de simulation

(30) Priority: 09.11.2001 JP 2001344999
(43) Date of publication of application: 14.05.2003
(73) Proprietor: FANUC LTD, Minamitsuru-gun, Yamanashi 401-0597 (JP)
(72) Inventor: Watanabe, Atsushi, Suginami-ku, Tokyo, 168-0072 (JP); Nagatsuka, Yoshiharu, c/o FANUC, Minamitsuru-gun, Yamanashi, 401-0511 (JP); Kuribayashi, Katsuyuki, c/o FANUC, Minamitsuru-gun, Yamanashi, 401-0511 (JP)
(74) Representative: Billington, Lawrence Emlyn

(56) References cited:
- EP-A- 0 415 637
- US-A- 5 666 297
- FEDROWITZ C H: "FERTIGUNGSZELLEN SIMULIEREN" ZWF ZEITSCHRIFT FUR WIRTSCHAFTLICHE FERTIGUNG UND AUTOMATISIERUNG, CARL HANSER VERLAG. MUNCHEN, DE, vol. 88, no. 7 / 8, 1 July 1993 (1993-07-01), pages 340-343, XP000383953 ISSN: 0947-0085
- WRIGHT C D ET AL: "EMULATION OF MODULAR MANUFACTURING MACHINES USING CAD MODELLING" MECHATRONICS, PERGAMON PRESS, OXFORD, GB, vol. 4, no. 7, 1 October 1994 (1994-10-01), pages 713-735, XP000474435 ISSN: 0957-4158

## Description

The present invention relates to a simulation device for simulating operations of machines such as robots and machine tools which operate in accordance with operation programs.

As a simulation device for simulating operations of machines which operate in accordance with respective operation programs, there has been proposed a simulation device for simulating operations of robots. This proposed simulation device for robots is required to have a high information processing capability since it is necessary to perform complicated arithmetic processing at high speed. Therefore, in the case of performing simulation of a robot system comprising a plurality of robots, it has been necessary to use a computer having high information processing capability and thus high price. Further, there is a difficulty of performing a simulation of a robot system comprising a great number of robots because of a limitation of the information processing capability of the computer.

US-A-5 666 297 discloses a simulation device according to the preamble of claim 1, used for simulating and optimising process plant designs in such fields as the chemical and pharmaceutical industries. The device solves an initial plant model through sequential modular simulation, to generate an initial point, and generates an equation-oriented plant model which is initialised using the initial point. The equation-oriented model is used for data reconciliation, parameter estimation, optimisation and simulation.

EP-A-0 415 637 discloses a factory system simulating method and apparatus which allows a plurality of dissimilar simulation systems to act in a cooperative manner such that they may act to provide a single overall simulation of a system. The system to be simulated is partitioned into these simulation systems and subsequently these systems are networked and synchronized. This interaction of these dissimilar simulation systems is accomplished by a simulation tool which allows a simulation system to route messages to other systems, synchronizes the operation of all simulation systems, allows partitioning elements to be stored and downloaded to these systems, and allows each simulation system to utilize its own native programming language during the creation of the single system simulation associated therewith.

According to the present invention, there is provided a simulation device for simulating operations of a plurality of machines to be operated simultaneously, said simulation device comprising: receiving means for receiving information of operations of the machines; uniting means for uniting the information of operations of the machines; and simulating means for simulating the simultaneous operations of the plurality of machines based on the information united by the unifying means; characterised in that: the plurality of machines operate in accordance with operation programs; said receiving means is arranged for receiving lapsing time information of operations of the machines and the positional information of the machines associated with the lapsing time information obtained by arithmetic processing means; said uniting means is arranged for uniting the positional information of the plurality of machines received by said receiving means in the order of lapsing time in simultaneous operations of the machines using the lapsing time information in the operations of the plurality of machines received by said receiving means; and said simulating means is a display control means for simultaneously displaying modeled images of the plurality of machines on a display device by animation based on the positional information of the plurality of machines united by said uniting means to thereby simulate the simultaneous operations of the plurality of machines.

An embodiment of the present invention may provide a simulation device for simulating an operation of a system comprising a plurality of machines such as robots and machine tools at low cost without using a costly computer having a high information processing capability.

Since the positional information of the plurality of machines collected separately may be united based on the lapsing time information respectively associated with the positional information, the operations of the plurality of machines may be simultaneously simulated, with a simulation device of low price.

The operation program providing means for providing operation programs to arithmetic processing means may be omitted from the simulation device. In this case, the operation programs may be provided to the arithmetic processing means in controllers of the machine or the information processing devices from respective storage devices or storage media.

The simulation device may include the arithmetic processing means to enable the simulation of the simultaneous operations of the plurality of machines without the controllers of machines or the information processing devices.

The lapsing time information may be one of time information in execution of the operation program, lapsing time from a start of execution of the operation program, and receiving time of the positional information by the receiving means.

The simulation device may be divided into a first simulating section having the operation program providing means, the receiving means and the uniting means; and a second simulating section having the display control means. In this case also, the operation program providing means may be omitted from the first simulating section.

The operation program may include an interlock command for the plurality of machines and in this case, the display control means displays modeled images of the plurality of machines on the display device by animation taking account of the interlock command.

The arithmetic processing means may include a controller of the machine and an information processing device having the arithmetic processing means equivalent to the controller of the machine. The machines may be industrial robots or machine tools.

### BRIEF DESCRIPTION OF THE DRAWINGS

FIG. I is a schematic block diagram of a simulation device according to a first embodiment of the present invention;
FIG. 2 is a schematic block diagram showing a simulation device in a machine system according to a second embodiment of the present invention;
FIG. 3 is a schematic block diagram showing simulation devices in a machine system according to a third embodiment of the present invention;
FIG. 4 is a flowchart of processing for collecting and uniting historical data of operations of machines;
FIG. 5 is a flowchart of processing for execution of simulation of operations of the machines based on the united historical data;
FIG. 6 is a schematic diagram showing an example of historical data of operations of the machines; and
FIG. 7 is a schematic diagram showing an example of the united historical data.

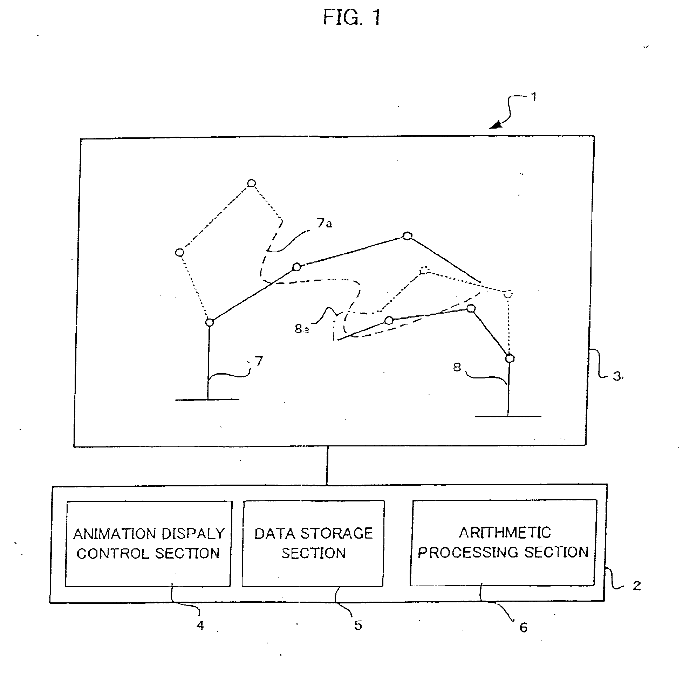

FIG. 1 shows a simulation device according to a first embodiment of the present invention. A simulation device 1 is constituted by a personal computer (PC) having a display device 3 and a computer body 2. The computer body 2 comprises an arithmetic processing section 6, a data storage section 5 and an animation display control section 4. The arithmetic processing section 6 has a data processing function of analyzing an operation program to obtain operational command data (positional information and control information) for a machine equivalent to data processing function of a controller for controlling the machine.

For simulating an operation of a manufacturing system comprising a plurality of machines such as robots and machine tools, an operation program for one of the machines constituting the system is inputted to the simulation device 1 through a communication line or a storage medium. The arithmetic processing section 6 analyzes the operation program to obtain operation command data (e.g. positional information on respective axes of the machine and control information such as an interlock command for queuing processing) for the machine successively and the obtained operation command data with lapsing time information from a start of the execution of the operation program are stored successively in the data storage section 5.

Likewise, an operation program for another machine in the system is inputted to the simulation device 1 and the operation program is analyzed by the arithmetic processing section 6 to successively obtain operation command data for another machine and the obtained operation command data with lapsing time information from a start of the execution of the operation program are stored in the data storage section 5. Subsequently, operation programs for the rest of the machines are successively executed to obtain operation command data for all of the machines with lapsing time information from respective starts of the execution of the operation programs.

The animation display control section 4 unites the operation command data for the machines stored in the data storage section 5 in time series by rearranging the operation command data in the order of lapsing time from a start of the simultaneous operations of the machines based on the lapsing time information stored in the data storage section 5, and displays images 7 and 8 of three-dimensional models of the machines by moving the images 7 and 8 based on the united operation command data of the machines, to simulate the operation of the machine system. In the case where the operation program includes an interlock command, interlock processing by the interlock command is displayed as a code indicating contents of the interlocking processing. Further, loci 7a an 8a of controlled points of the machines 7 and 8, respectively, are displayed. In the example shown in FIG. 1, two robots constitute a system

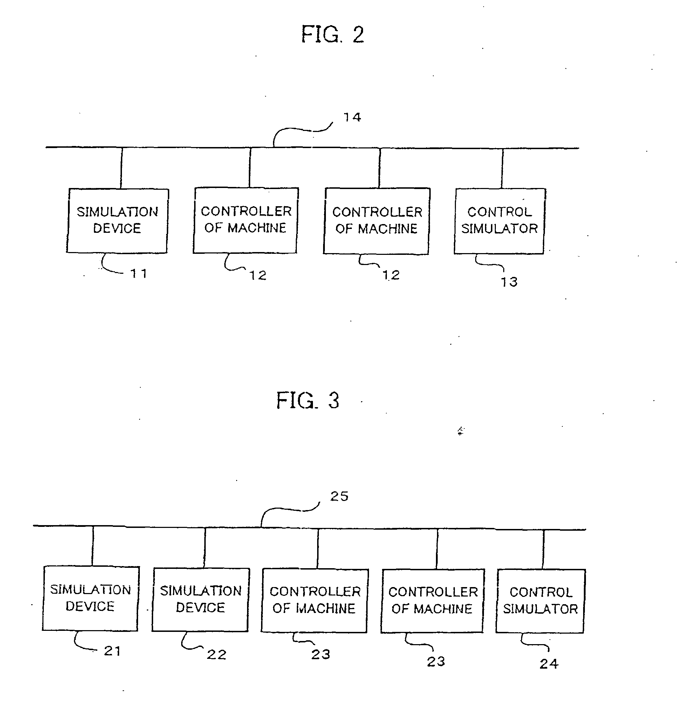

FIG. 2 shows a simulation device in a network of controllers of machines according to a second embodiment of the present invention. A simulation device 11 in this embodiment may have the same hardware architecture including the arithmetic processing section 6 as the simulation device 1 shown in FIG. 1, or may not have the arithmetic processing section 6. The arithmetic processing performed by the arithmetic processing section 6 can be performed by an arithmetic processing device provided out of the simulation device 11 in this embodiment.

The simulation device 11 is connected with controllers 12 for machines such as robots and machine tools through a communication line 14 and also connected with a control simulator 13 which has the function of the arithmetic processing section 6 in the simulator 1 for analyzing the operation program for the machine to obtain operation command data.

In this embodiment, operation programs for the machines are respectively inputted to the controllers 12 and the control simulator 13 from the simulation device 11 through the communication line 14. In the case of the simulation device 11 having the arithmetic operation section 6, an operation program may be inputted to the arithmetic operation section 6 of the simulation device 11.

The arithmetic processing sections in the controllers 12 of the machines and the operation simulator 13 respectively analyze the inputted operation programs, and the obtained operation command data are sent to the simulation device 11. In the case of the simulation device 11 having the arithmetic operation section 6, the arithmetic processing section 6 analyzes the inputted operation program and obtained operation command data are stored in the data storage section 5 of the simulation device 11. The simulation device 11 unites the operation command data stored in the data storage section 5 in the order of lapsing time from a start of the simultaneous operations in time series base on the lapsing time information associated with the respective operation command data. Then, the simulation device 11 simulates the operations of the machines by displaying images of the three-dimensional models of the machines by animation based on the united operation command data of the machines in time series from the simultaneous start of the operations. In the case where the operation program includes an interlock command for commanding interlock processing, the code indicating the interlock processing is displayed.

FIG. 3 shows a third embodiment in which the simulation device is divided into two simulating sections of a first simulation device 22 and a second simulation device 21. As shown in FIG. 3, the first simulation device 22, the second simulation device 21, controllers 23 of machines and a control simulator 24 are connected with one another through a communication line 25. In this embodiment, the function of the simulation device 11 in the second embodiment is divided and assigned to the two simulation devices 21 and 22. Specifically, the first simulation device 22 performs the processing of collecting and uniting the operation command data of the machines and the second simulation device 21 performs the processing for simulation of the operations of the machines based on the united operation command data of the machines.

The first simulation device 22 sends operation programs to the controllers 23 of the machines constituting the system, the control simulator 24 for executing the operation program in place of the controller to obtain the operation command data, and further the arithmetic processing sections 6 in the simulation devices 22 and 21, and commands the controllers 23, the control simulator 24 and further the arithmetic processing sections 6 in the simulation devices 21 and 22 to execute the operation programs, respectively. The simulation device 22 obtains the operation command data with associated lapsing time information through the communication line 25, and unites the operation command data of the respective machines based on the lapsing time information in time series.

The simulation device 21 simulates the operations of the machines by displaying the images of the models of the machines by animation in time series based on the united operation command data. In the case where the operation program includes an interlock command, the code indicating the interlock processing is displayed.

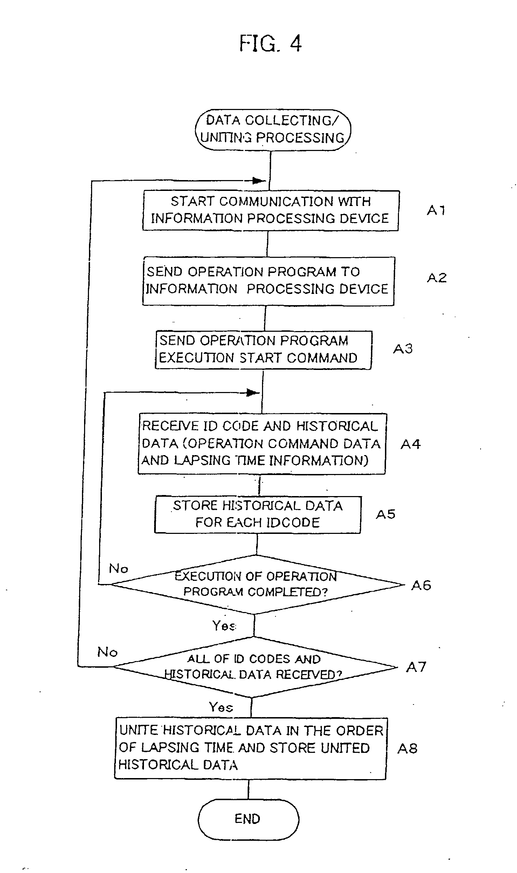

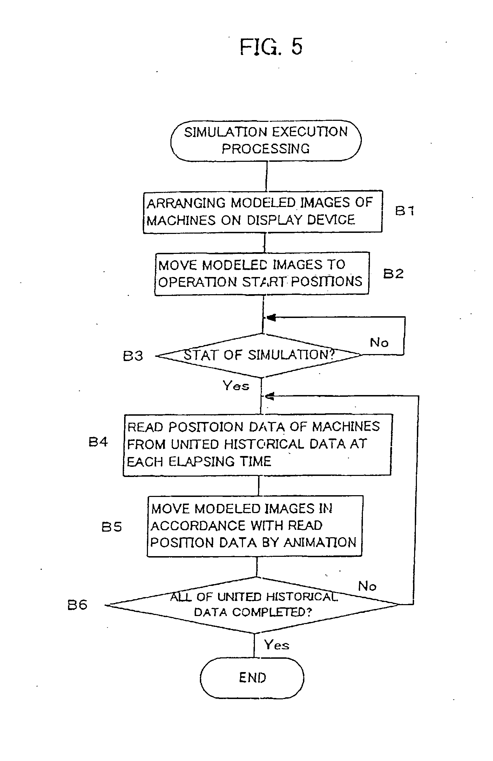

FIG. 4 shows processing of collecting the operation command data and uniting the collected operation command data to be performed by the simulation device 1 as shown in FIG. 1, the simulation device 11 as shown in FIG. 2 or the first simulation device 21 as shown in FIG. 3. FIG. 5 shows processing of simulation by moving the images of three-dimensional models of the machines by animation to be performed by the simulation device I as shown in FIG. 1, the simulation device 11 as shown in FIG. 2 or the second simulation device 21 as shown in FIG. 3.

First, communication between the simulation device and the information processing device (i.e. the controller of the machine, the control simulator, the arithmetic processing section) for executing the operation program of the machine constituting the system to obtain the operation command data is enabled (Step A1). In the first embodiment as shown in FIG. 1, since the simulation device 1 functions as the information processing device, this step may be omitted not necessarily performed. In the second embodiment as shown in FIG. 2, the information processing devices comprise the controllers 12, the control simulator 13 and the arithmetic processing section 6 provided in the simulation device 1. In the third embodiment as shown in FIG. 3, the information processing devices comprise the controllers 23, the control simulator 24 and the simulation devices 21 and 22.

Then, the operation program for a machine constituting the system is sent to the information processing device (Step A2) and issues commands for executing the operation programs to the information processing devices (Step A3). The information processing device executes the operation program to obtain operation command data including positional information and control information, and send the obtained operation command data with an ID code identifying the operation program (and also identifying the machine to be controlled by the operation program) and lapsing time information from the start of execution of the operation program to the simulation device.

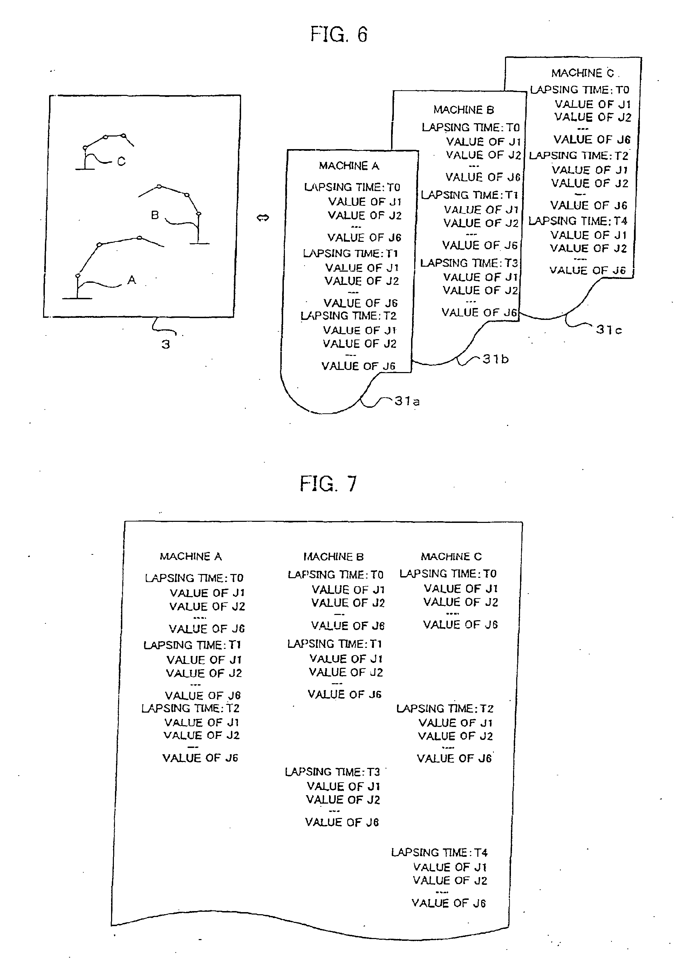

The simulation device receives the operation command data with the ID code and the lapsing time information (Step A4) and stores the positional information and the control information in the order of lapsing time as historical information (Step A5). An example of the historical information is shown in FIG. 6 in which operations of three robot A, B and C constituting a robot system are simulated. In accordance with the ID code, the lapsing time information T1, T2 and T3 received from the controllers of the respective machines, the positional information (position data of axes J1-J6 of the respective robots in this example) and the control information (not shown in this example) are stored as the historical information 31 a, 31 b and 31c.

The processing from Step S4 to Step S6 is repeatedly executed until a signal indicating completion of execution of the operation program is received from the information processing device to which the operation program has been sent.

When it is determined that execution of the operation program is completed in Step A6, the procedure proceeds to Step A7 and it is determined whether or not the sending and execution of the operation program for all of the machines constituting the system are completed (Step A7). If it is not completed, the procedure returns to Step A1 to send the remaining operation program to the associated information processing device to perform the above-described processing to obtain the historical information on the remaining machine, so that the historical information 31a, 31b and 31c as shown in FIG. 6 is obtained.

Thus, the positional information and the control information obtained by executing the operation programs for all of the machines in the system with the associated lapsing time information are obtained, and then the obtained historical information on the machines are rearranged and united based on the respective lapsing time information for the simultaneous operations of the machine (Step A8).

FIG. 7 shows an example of a united historical information obtained by uniting the respective historical information 31a, 31b and 31c for the three robots as shown in FIG. 6. At the time T0 of the start of the operation programs, all of the three robots A, B and C have the historical information of positional information and thus the positional information of the three robots A, B and C is stored for the time T0. At the time T1, the robots A and B have the historical information and thus the positional information of the robots A and B at the time T1 is stored in the common time series. At the time T2, the robots A and C have the historical positional information, and thus these positional data are stored for the time T2. Subsequently, the historical data of the three robots are rearranged and stored at each lapsing time in the common time series. Thus, the historical data of the robots constituting the robot system is united in the order of lapsing time form a start of the simultaneous operations of the machines. In the case where the historical information includes an interlock processing command, the interlock processing command is stored with the positional information to be united.

The lapsing time information may be time information in execution of the operation program or lapsing time form a start of execution of the operation program. Information in a counter counting execution steps of the operation program in the information processing device can be used as the time information in execution of the operation program and the lapsing time form the start of execution of the operation program. In the case where the lapsing time from a start of the operation program is sent to the simulation device from the information processing device, the operation command data of the machines are rearranged to be united on the basis of the lapsing time form the start of the simultaneous operations of the machines. In the case where the time information at the respective operation command data is sent from the information processing device to the simulation device, the time information of the start of the operation is subtracted from the respective time information at respective operation command data to obtain the lapsing time from the start of the operation, and the operation command data of the machines are rearranged to be united on the basis of the obtained lapsing time from the start of the simultaneous operations.

FIG. 5 shows processing for performing simulation of the operation of the machine system based on the united operation command data thus obtained. The processing for performing of the simulation is executed by the simulation device 1 in the first embodiment and the simulation device 11 in the second embodiment and the second simulation device 22 in the third embodiment.

The images of three-dimensional models of the machines are arranged at respective predetermined positions on the screen of the display device 3 (B1). The positional information of the machines at the start time T0 of the operations in the united operation command data is read and the images of three-dimensional models of the machines are moved to the respective positions determined by the positional information of the machines at the start time T0 (Step B2).

It is determined whether or not a simulation start command is issued (Step B3) to wait until the simulation start signal is issued. It is determined that the simulation start command is issued, the positional information of the respective machines is read from the united operation command data in the order of lapsing time from the simultaneous start of operation (Step B4) and the images of the three-dimensional models of the machines are moved to the respective positions determined by the read positional information, to simulate the operations of the machines (Step B5). The control information such as interlock signals are displayed by codes or signals indicating the contents of the control information. The processing of Steps B4 and B5 is repeatedly executed until it is determined that the simulation of the machines based on all of the united operation command date is completed at Step B6, to simulate the operation of the machines in the system.

In the third embodiment, the processing of correcting and uniting the operation command data is performed by the first simulation device 22 and the processing of displaying the images of the three-dimensional models of the machines by animation is performed by the second simulation device 21. In the first and second embodiments, the same simulation device 1 and the same simulation device 11 perform the processing, the procedure may proceed from Step A8 in FIG. 4 to Step B1 in FIG. 5.

In the second and third embodiment, an operation program is sent from the simulation device to the information processing device having arithmetic processing function for obtaining the operation command data of positional information by processing the operation program of the machine. The operation program is not necessarily sent from the simulation device to the information processing device. The operation program may be inputted to the controller of the machine or the operation simulator and the positional information, i.e., operation command data obtained by executing the operation program with lapsing time information may be sent to the simulation device to collect the positional information of all the machines constituting the system with the respective lapsing time information.

According to the embodiments, operations of machines according to respective operation programs are analyzed by one arithmetic processing unit or a plurality of arithmetic processing units to obtain the positional information of the machines with associated lapsing time information so that the positional information of all of the machines constituting the system is collected and united in the order of lapsing time of simultaneous operations of the machines, and the operations of the machine are simulated by moving modeled images of the machines according to the lapsing time from the start of the simultaneous operations. Thus, it is not necessary for one arithmetic processing device to execute the operation programs for the machines to obtain the operation data of the machines constituting the system at a time so that an expensive information processing device is not required to provide the simulation device at low cost.

Further, if a new machine is added to the system, the simulation of the operations of all of the machines constituting the system can be performed by obtaining the positional information of the newly added machine with the lapsing time information. If any of the machines constituting the system is changed, the simulation of the operations of the modified system can be performed by obtaining the positional information of the changed machine, to cope with the modification of the system with ease.

## Claims

1. A simulation device (1;11; 21,22) for simulating operations of a plurality of machines to be operated simultaneously, said simulation device comprising:
receiving means for receiving information of operations of the machines;
uniting means for uniting the information of operations of the machines; and
simulating means for simulating the simultaneous operations of the plurality of machines based on the information united by the unifying means;
**characterised in that**:
the plurality of machines operate in accordance with operation programs;
said receiving means (5) is arranged for receiving lapsing time information of operations of the machines and positional information of the machines associated with the lapsing time information obtained by arithmetic processing means (6;12, 13;23, 24);
said uniting means (4, 22) is arranged for uniting the positional information of the plurality of machines received by said receiving means in the order of lapsing time in simultaneous operations of the machines using the lapsing time information in the operations of the plurality of machines received by said receiving means; and
said simulating means is a display control means (4, 21) for simultaneously displaying modeled images (7, 8) of the plurality of machines on a display device (3) by animation based on the positional information of the plurality of machines united by said uniting means to thereby simulate the simultaneous operations of the plurality of machines.

2. A simulation device for simulating operations of a plurality of machines according to claim 1, further comprising:
operation program providing means (22) for providing operation programs to arithmetic processing means (6;12, 13;23, 24) for obtaining the lapsing time information of operations of the machines and the positional information of the machines associated with the lapsing time information.

3. A simulation device for simulating operations of a plurality of machines according to claim 1 or 2, including the arithmetic processing means (6).

4. A simulation device for simulating operations of a plurality of machines according to claim 1, 2 or 3, wherein said lapsing time information includes one of time information in execution of the operation program and lapsing time from a start of execution of the operation program.

5. A simulation device for simulating operations of a plurality of machines according to any preceding claim, wherein the simulation device is divided into a first simulating section (22) having said receiving means and said uniting means; and a second simulating section (21) having said display control means.

6. A simulation device for simulating operations of a plurality of machines according to claim 5, wherein the first simulating section (22) has said operation program providing means.

7. A simulation device for simulating operations of a plurality of machines according to any preceding claim, wherein said operation program includes an interlock command for the plurality of machines and said display control means (4, 21) displays the modeled images (7, 8) of the plurality of machines on the display device (3) by animation taking account of the interlock command.

8. A simulation device for simulating operations of a plurality of machines according to any preceding claim, wherein said arithmetic processing means (6) is constituted by either a controller (12, 13;23, 24) of the machine, or an information processing device (2) having the arithmetic processing means equivalent to the controller of the machine.

9. A simulation device for simulating operations of a plurality of machines according to any preceding claim, wherein said machines include industrial robots.

10. A simulation device for simulating operations of a plurality of machines according to any preceding claim, wherein said machines include machine tools.

## Patentansprüche

1. Simulationsvorrichtung (1,11; 21,22) zum Simulieren von Arbeitsschritten einer Mehrzahl von Maschinen, die simultan arbeiten sollen, umfassend:
eine Empfangseinrichtung zum Empfangen von Information über Arbeitsschritte der Maschinen;
eine Vereinigungseinrichtung zum Vereinigen der Information über Arbeitsschritte der Maschinen; und
eine Simulationseinrichtung zum Simulieren der gleichzeitigen Arbeitsschritte der Mehrzahl Maschinen auf Basis der Information, die von der Vereinigungseinrichtung vereinigt wurde;
**dadurch gekennzeichnet, dass**:
die Mehrzahl Maschinen nach Arbeitsprogrammen arbeiten;
wobei die Empfangseinrichtung (5) derart eingerichtet ist, dass sie Information über die verstreichende Zeit von Arbeitsschritten der Maschinen enthält sowie Positionsinformation über die Maschinen in Verbindung mit der Information über die verstreichende Zeit, die durch arithmetische Verarbeitungseinrichtungen (6;12, 13;23, 24) erhalten wird;
wobei die Vereinigungseinrichtung (4,22) derart eingerichtet ist, dass sie die Positionsinformation über die Mehrzahl Maschinen, die von der Empfangseinrichtung in der Reihenfolge der verstreichenden Zeit bei simultanen Arbeitsschritten der Maschinen empfangen wird, vereinigt unter Verwendung der Information über die verstreichende Zeit bei den Arbeitsschritten der Mehrzahl Maschinen, die von der Empfangseinrichtung empfangen wird; und
die Simulationseinrichtung eine Anzeigensteuereinrichtung (4,21) ist, auf der gleichzeitig modellierte Bilder (7,8) der Mehrzahl Maschinen auf einer Anzeigeinrichtung (3) angezeigt werden mithilfe einer Animation auf Basis der Positionsinformation über die Mehrzahl Maschinen, die von der Vereinigungseinrichtung vereinigt wird, wodurch die simultanen Arbeitsschritte der Mehrzahl Maschinen simuliert werden.

2. Simulationsvorrichtung zum Simulieren von Arbeitsschritten einer Mehrzahl Maschinen nach Anspruch 1, die zudem umfasst:
eine Bereitstellungseinrichtung für Betriebsprogramme (22) zum Bereitstellen von Betriebsprogrammen an die arithmetische Verarbeitungseinrichtung (6;12, 13;23, 24), damit die Information über die verstreichende Zeit von Arbeitsschritten der Maschinen und die Positionsinformation der Maschinen in Verbindung mit der Information über die verstreichende Zeit erhalten werden kann.

3. Simulationsvorrichtung zum Simulieren von Arbeitsschritten einer Mehrzahl Maschinen nach Anspruch 1 oder 2, die die arithmetische Verarbeitungseinrichtung (6) enthält.

4. Simulationsvorrichtung zum Simulieren von Arbeitsschritten einer Mehrzahl Maschinen nach Anspruch 1, 2 oder 3, wobei die Information über die verstreichende Zeit eines umfasst von Zeitinformation beim Ausführen des Betriebsprogramms und verstreichende Zeit vom Beginn der Ausführung des Betriebsprogramms.

5. Simulationsvorrichtung zum Simulieren von Arbeitsschritten einer Mehrzahl Maschinen nach einem vorhergehenden Anspruch, wobei die Simulationsvorrichtung unterteilt ist in einen ersten Simulationsabschnitt (22) mit der Empfangseinrichtung und einen zweiten Simulationsabschnitt (21) mit der Anzeigesteuereinrichtung.

6. Simulationsvorrichtung zum Simulieren von Arbeitsschritten einer Mehrzahl Maschinen nach Anspruch 5, wobei der erste Simulationsabschnitt (22) eine erste Bereitstellungseinrichtung für Betriebsprogramme aufweist.

7. Simulationsvorrichtung zum Simulieren von Arbeitsschritten einer Mehrzahl Maschinen nach einem vorhergehenden Anspruch, wobei das Betriebsprogramm einen Interlockbefehl für die Mehrzahl Maschinen enthält und die Anzeigesteuereinrichtung (4,21) die modellierten Bilder (7,8) der Mehrzahl Maschinen auf der Anzeigeinrichtung (3) anzeigt mittels Animation unter Berücksichtigung des Interlockbefehls.

8. Simulationsvorrichtung zum Simulieren von Arbeitsschritten einer Mehrzahl Maschinen nach einem vorhergehenden Anspruch, wobei die arithmetische Verarbeitungseinrichtung (6) entweder aus einer Steuerung (12, 13;23, 24) der Maschine besteht oder aus einer Informationsverarbeitungseinrichtung (2) mit einer arithmetischen Verarbeitungseinrichtung, die der Steuerung der Maschine gleichwertig ist.

9. Simulationsvorrichtung zum Simulieren von Arbeitsschritten einer Mehrzahl Maschinen nach einem vorhergehenden Anspruch, wobei die Maschinen Arbeitsroboter umfassen.

10. Simulationsvorrichtung zum Simulieren von Arbeitsschritten einer Mehrzahl Maschinen nach einem vorhergehenden Anspruch, wobei die Maschinen Werkzeugmaschinen umfassen.

## Revendications

1. Dispositif de simulation (1 ; 11 ; 21,22) pour simuler des opérations de plusieurs machines à faire fonctionner simultanément, ledit dispositif de simulation comprenant :
des moyens de réception pour recevoir des informations des opérations des machines ;
des moyens de mise en commun pour réunir les informations des opérations des machines ; et
des moyens de simulation pour simuler les opérations simultanées de la pluralité de machines sur la base des informations réunies par les moyens de mise en commun;
**caractérisé en ce que**:
plusieurs machines précitées fonctionnent en accord avec des programmes de fonctionnement ;
lesdits moyens de réception (5) sont agencés pour recevoir des informations se rapportant au temps écoulé des opérations des machines et des informations de position des machines associées aux informations se rapportant au temps écoulé obtenues par des moyens de traitement arithmétiques (6 ; 12,13 ; 23,24) ;
lesdits moyens de mise en commun (4, 22) sont agencés pour réunir les informations de position de plusieurs machines précitées reçues par lesdits moyens de réception dans l'ordre du temps écoulé lors des fonctionnements simultanés des machines utilisant les informations se rapportant au temps écoulé dans les opérations de plusieurs machines précitées reçues par lesdits moyens de réception ; et
lesdits moyens de simulation sont des moyens de commande d'affichage (4, 21) pour afficher simultanément des images développées (7,8) de plusieurs machines précitées sur un dispositif d'affichage (3) par animation, sur la base des informations de position de plusieurs machines précitées réunies par ledit moyen de mise en commun pour simuler ainsi les opérations simultanées de plusieurs machines précitées.

2. Dispositif de simulation pour simuler des opérations de plusieurs machines selon la revendication 1, comprenant en outre:
des moyens réalisant des programmes de fonctionnement (22) pour réaliser des programmes de fonctionnement pour des moyens de traitement arithmétiques (6 ; 12,13 ; 23,24) afin d'obtenir les informations se rapportant au temps écoulé des fonctionnements des machines et les informations de position des machines associées aux informations se rapportant au temps écoulé.

3. Dispositif de simulation pour simuler des opérations de plusieurs machines selon la revendication 1 ou 2, incluant les moyens de traitement arithmétiques (6).

4. Dispositif de simulation pour simuler des opérations de plusieurs machines selon la revendication 1, 2 ou 3, où lesdites informations se rapportant au temps écoulé comprennent une information se rapportant au temps lors de l'exécution du programme d'opération et au temps écoulé depuis le début de l'exécution du programme de fonctionnement.

5. Dispositif de simulation pour simuler des opérations de plusieurs machines selon l'une des revendications précédentes, où le dispositif de simulation est divisé en une première section de simulation (22) ayant lesdits moyens de réception et lesdits moyens de mise en commun ; et une seconde section de simulation (21) ayant lesdits moyens de commande d'affichage.

6. Dispositif de simulation pour simuler des opérations de plusieurs machines selon la revendication 5, où la première section de simulation (22) présente lesdits moyens de réalisation des programmes de fonctionnement.

7. Dispositif de simulation pour simuler des opérations de plusieurs machines selon l'une des revendications précédentes, où ledit programme de fonctionnement comprend une instruction d'inter-verrouillage de plusieurs machines, et lesdits moyens de commande d'affichage (4,21) affichent les images développées (7,8) de plusieurs machines précitées sur le dispositif d'affichage (3) par animation en prenant en considération l'instruction d'inter-verrouillage.

8. Dispositif de simulation pour simuler des opérations de plusieurs machines selon l'une des revendications précédentes, où lesdits moyens de traitement arithmétiques (6) sont constitués soit par un dispositif de commande (12,13 ; 23,24) de la machine, soit par un dispositif de traitement des informations (2) ayant les moyens de traitement arithmétiques équivalents au dispositif de commande de la machine.

9. Dispositif de simulation pour simuler des opérations de plusieurs machines selon l'une des revendications précédentes, où lesdites machines comprennent des robots industriels.

10. Dispositif de simulation pour simuler des opérations de plusieurs machines selon l'une des revendications précédentes, où lesdites machines comprennent des machines-outils.
